# EUROPÄISCHE PATENTANMELDUNG

(11) **EP 3 383 134 A1**
(43) Veröffentlichungstag der Anmeldung: **03.10.2018**
(21) Anmeldenummer: 18159917.6
(22) Anmeldetag: 05.03.2018
(51) Int. Cl.: H05B 6/12, A47J 36/34, F24C 15/10

(54) **KOCHSYSTEM UND VERFAHREN ZU EINER POSITIONIERUNG EINES KOCHGESCHIRRELEMENTS**

(30) Priorität: 30.03.2017 ES 201730506 P
(71) Anmelder: BSH Hausgeräte GmbH, 81739 München (DE)
(72) Erfinder: Lasobras, Bernad Javier, 50016 Ejea de Los Callaberos (Zaragoza) (ES); Llorente, Gil Sergio, 50009 Zaragoza (ES); Mir, Bel Jorge, 50019 Zaragoza (ES); Rivera, Peman Julio, 50410 Cuarte de Huerva (Zaragoza) (ES)

(57) **Zusammenfassung**

Die Erfindung geht aus von einem Kochsystem (10) mit zumindest einer Unterlegeinheit (12), welche in wenigstens einem Heizbetriebszustand zu einer Anordnung zwischen einem zu erhitzenden Kochgeschirrelement (14) und einer Abdeckplatte (16) vorgesehen ist, mit einer Induktionsheizeinheit (18), welche zu einer Erhitzung des Kochgeschirrelements (14) vorgesehen ist, und mit einer Positionierungseinheit (20), welche zu einer Unterstützung einer Positionierung der Unterlegeinheit (12) relativ zu der Induktionsheizeinheit (18) vorgesehen ist.

Um eine gattungsgemäße Vorrichtung mit verbesserten Eigenschaften hinsichtlich einer Positionierung bereitzustellen, wird vorgeschlagen, dass die Positionierungseinheit (20) wenigstens ein der Unterlegeinheit (12) zugeordnetes Positionierungselement (22) aufweist, welches als induktives Element (24) ausgebildet ist und dazu vorgesehen ist, zumindest teilweise zu der Unterstützung der Positionierung der Unterlegeinheit (12) relativ zu der Induktionsheizeinheit (18) beizutragen.

## Beschreibung

Die Erfindung betrifft ein Kochsystem nach dem Oberbegriff des Anspruchs 1 und ein Verfahren zu einer Positionierung eines Kochgeschirrelements gemäß dem Anspruch 11.

Aus dem Stand der Technik sind Kochsysteme mit zumindest einer Unterlegeinheit bekannt, welche zu einem Auflegen auf einer Abdeckplatte eines Kochfelds ausgebildet ist. Die Unterlegeinheit ist in einem Heizbetriebszustand zwischen der Abdeckplatte und einem beheizten Gargeschirr angeordnet. Das Kochsystem umfasst zudem eine Positionierungseinheit, welche zu einer Unterstützung einer Positionierung der Unterlegeinheit relativ zu der Induktionsheizeinheit vorgesehen ist, wobei zur Unterstützung der Positionierung der Unterlegeinheit ein Beschleunigungssensor und/oder eine Kamera des Kochsystems zum Einsatz kommt.

Die Aufgabe der Erfindung besteht insbesondere darin, eine gattungsgemäße Vorrichtung mit verbesserten Eigenschaften hinsichtlich einer Positionierungsunterstützung bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einem Kochsystem mit zumindest einer Unterlegeinheit, welche in wenigstens einem Heizbetriebszustand zu einer Anordnung zwischen einem zu erhitzenden Kochgeschirrelement und einer Abdeckplatte vorgesehen ist, mit einer Induktionsheizeinheit, welche zu einer Erhitzung des Kochgeschirrelements vorgesehen ist, und mit einer Positionierungseinheit, welche zu einer Unterstützung einer Positionierung der Unterlegeinheit relativ zu der Induktionsheizeinheit vorgesehen ist.

Es wird vorgeschlagen, dass die Positionierungseinheit wenigstens ein der Unterlegeinheit zugeordnetes Positionierungselement aufweist, welches als induktives Element ausgebildet und dazu vorgesehen ist, zumindest teilweise zu der Unterstützung der Positionierung der Unterlegeinheit relativ zu der Induktionsheizeinheit beizutragen. Durch diese Ausgestaltung kann eine vorteilhafte Positionierungsunterstützung geschaffen werden. Ferner kann ein insbesondere von einer externen Energiequelle unabhängig betriebsbereites Positionierungselement bereitgestellt werden, wodurch insbesondere Energiekosten gesenkt werden können und vorteilhaft folglich auf eine kabelgestützte Verbindung mit einer externen Energiequelle verzichtet werden kann. Ferner kann insbesondere eine Anwendungsflexibilität verbessert und vorteilhaft ein Bedienkomfort erhöht werden. Zudem können vorteilhaft Material- und/oder Herstellungskosten sowie ein Wartungsaufwand gesenkt werden.

Unter einer "Unterlegeinheit" soll insbesondere eine Einheit verstanden werden, welche insbesondere zu einem Auflegen, insbesondere zu einer Platzierung und/oder Positionierung, auf der Abdeckplatte des Kochsystems, insbesondere eines Kochfelds des Kochsystems, und zu einem Aufstellen zumindest eines Kochgeschirrelements vorgesehen ist und welche insbesondere in dem Heizbetriebszustand eine Unterlage für das beheizte Kochgeschirrelement wenigstens teilweise ausbildet. In einer Einbaulage ist die Unterlegeinheit insbesondere zu einer Platzierung oberhalb eines Kochfelds, insbesondere oberhalb der Abdeckplatte, vorgesehen. Die Abdeckplatte ist insbesondere als Küchenarbeitsplatte ausgebildet. Das Kochsystem weist insbesondere das Kochfeld auf. Unter einem "Kochfeld" soll insbesondere eine Einheit verstanden werden, welche zumindest eine Induktionsheizeinheit, eine Versorgungseinheit und eine Elektronikeinheit des Kochfelds aufweist, welche insbesondere dazu vorgesehen ist, in dem Heizbetriebszustand eine Versorgungseinheit insbesondere zu einer Versorgung der Induktionsheizeinheit mit Energie, insbesondere mit elektrischer Energie, anzusteuern, wobei die Induktionsheizeinheit in dem Heizbetriebszustand in Abhängigkeit einer Versorgung durch die Versorgungseinheit insbesondere zu einer Bereitstellung von Energie, insbesondere von elektromagnetischer Energie, insbesondere induktiver Energie, an wenigstens ein Kochgeschirrelement, insbesondere an das Kochgeschirrelement, vorgesehen ist. Das Kochfeld kann insbesondere eine Kochfeldplatte aufweisen, wobei die Abdeckplatte zumindest teilweise einstückig mit der Kochfeldplatte ausgebildet und/oder vollständig als Kochfeldplatte ausgebildet sein kann. Die Unterlegeinheit ist insbesondere von dem Kochfeld, insbesondere von der Abdeckplatte, verschieden und/oder vorteilhaft relativ zu dem Kochfeld, insbesondere zu der Abdeckplatte, beweglich. Insbesondere ist die Unterlegeinheit als eine separate Einheit ausgebildet. Insbesondere kann eine als separate Einheit ausgebildete Unterlegeinheit an einer beliebigen Position auf der Abdeckplatte positioniert werden. Insbesondere ist die Unterlegeinheit zu einer Verwendung mit dem Kochfeld und vorzugsweise mit verschiedenen Kochfeldern vorgesehen. Das Kochfeld ist insbesondere zu einer Verwendung mit zumindest einer Unterlegeinheit und vorteilhaft wenigstens im Wesentlichen zeitgleich mit zumindest zwei, vorteilhaft mit zumindest drei und vorzugsweise mit zumindest vier Unterlegeinheiten vorgesehen. Das Kochfeld ist vorzugweise als ein Matrixkochfeld ausgebildet.

Die Induktionsheizeinheit ist insbesondere dazu vorgesehen, mittels zumindest eines Induktionsheizelements, welches insbesondere als eine Spule ausgebildet ist, vorzugsweise mittels einer Mehrzahl von Induktionsheizelementen eine elektrische Energie in eine induktive Energie umzuwandeln und einem Kochgeschirrelement zu einer Umwandlung in Wärme zuzuführen. Insbesondere bildet die Unterlegeinheit die Unterlage für das beheizte Kochgeschirrelement wenigstens im Wesentlichen aus. Die Unterlegeinheit weist insbesondere eine wenigstens im Wesentlichen plattenförmige Gestalt auf.

Unter einer "Positionierungseinheit" soll insbesondere eine Einheit verstanden werden, welche in zumindest einem Betriebszustand eine Position der Unterlegeinheit relativ zur Induktionsheizeinheit erkennt und insbesondere zur Weiterverarbeitung bereitstellt, insbesondere anzeigt. Darunter, dass "das Positionierungselement zumindest teilweise zur Unterstützung der Positionierung der Unterlegeinheit vorgesehen ist", soll hier insbesondere verstanden werden, dass das Positionierungselement insbesondere einen Teil einer Positionierungseinheit ausbildet und zumindest zu einer Unterstützung der Positionierung der Unterlegeinheit relativ zu dem Kochfeld beiträgt.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Zudem wird vorgeschlagen, dass das Positionierungselement zumindest teilweise in der Unterlegeinheit integriert ist. Dadurch kann insbesondere ein kompaktes und vorteilhaft bauraumsparendes Positionierungselement erhalten und vorteilhaft Material- und/oder Herstellungskosten reduziert werden. Darunter, dass "das Positionierungselement zumindest teilweise in der Unterlegeinheit integriert ist", soll insbesondere verstanden werden, dass die Unterlegeinheit zumindest bereichsweise und/oder abschnittsweise das Positionierungselement umgreift und/oder formschlüssig umgibt. Insbesondere ist das Positionierungselement vollständig in der Unterlegeinheit integriert.

In einer bevorzugten Ausgestaltung der Erfindung wird vorgeschlagen, dass das Positionierungselement als Spule ausgebildet ist. Dadurch kann insbesondere eine induktive Energie aus der Induktionsheizeinheit auf das Positionierungselement übertragen werden, wodurch insbesondere Energiekosten reduziert werden können. Zudem ist eine Kommunikation des Positionierungselements mit der Induktionsheizeinheit mittels eines induktiven Signals vorteilhaft verbessert.

Zu einer verbesserten Positionierung der Unterlegeinheit wird in einer bevorzugten Ausgestaltung der Erfindung vorteilhaft vorgeschlagen, dass die Positionierungseinheit wenigstens ein der Induktionsheizeinheit zugeordnetes und zu dem Positionierungselement korrespondierendes weiteres Positionierungselement aufweist, welches dazu vorgesehen ist, zu der Unterstützung der Positionierung der Unterlegeinheit relativ zu der Induktionsheizeinheit mit dem Positionierungselement zusammenzuwirken. Dadurch kann insbesondere eine Positionierung der Unterlegeinheit relativ zu der Induktionsheizeinheit und eine Erkennung der Positionierung verbessert werden und eine Kompatibilität der Positionierungseinheit erhöht werden. Insbesondere ist das weitere Positionierungselement in der Induktionsheizeinheit zumindest teilweise, vorteilhaft vollständig integriert.

Zudem wird vorgeschlagen, dass die Induktionsheizeinheit wenigstens ein Induktionsheizelement, insbesondere eine Heizspule, aufweist, mit welchem das weitere Positionierungselement zumindest teilweise einstückig ausgebildet ist. Unter "zumindest teilweise einstückig" soll in diesem Zusammenhang insbesondere verstanden werden, dass zumindest ein Bauteil zumindest eines Objekts, insbesondere das Induktionsheizelement, einstückig mit zumindest einem Bauteil zumindest eines weiteren Objekts, insbesondere dem weiteren Positionierungselement, einstückig ausgebildet ist. Insbesondere ist das weitere Positionierungselement zumindest teilweise als Induktionsheizelement ausgebildet. Dadurch kann vorteilhaft ein bauraumsparendes weiteres Positionierungselement erreicht und Material- und/oder Herstellungskosten reduziert werden.

Zu einer verbesserten Positionierung durch die Positionierungseinheit wird vorgeschlagen, dass das Positionierungselement dazu vorgesehen ist, mit dem weiteren Positionierungselement zur Unterstützung der Positionierung induktiv zu koppeln. Dadurch kann insbesondere eine Übertragung eines insbesondere induktiven Signals, insbesondere eines magnetischen Felds, und ein Betrieb zur Positionierungsunterstützung vorteilhaft verbessert werden. Insbesondere soll unter "induktiv gekoppelt" in diesem Zusammenhang insbesondere verstanden werden, dass ein induktives Signal eines ersten Objekts, insbesondere ein magnetisches Feld des weiteren Positionierungselements, in dem Positionierungselement einen elektrischen Strom, insbesondere einen Induktionsstrom, und/oder eine elektrische Spannung, insbesondere eine Induktionsspannung, induziert. Insbesondere ist das weitere Positionierungselement dazu vorgesehen, ein induktives Signal, insbesondere ein magnetisches Feld, zu erzeugen, welches in dem Positionierungselement eine Spannung und/oder einen Strom induziert, wobei die induzierte Spannung und/oder der induzierte Strom mit dem induktiven Parameter, insbesondere dem zuvor bereits erwähnten induktiven Leitwert, des Positionierungselements korreliert sind. Alternativ könnte jedoch auch ein induktives Signal, insbesondere ein magnetisches Feld, in dem Positionierungselement einen Strom und/oder eine Spannung in dem weiteren Positionierungselement induzieren.

Zudem wird vorgeschlagen, dass das Kochsystem eine Positionsanzeigeeinheit aufweist, welche zur Anzeige der Positionierung anhand einer Größe eines induktiven, insbesondere des zuvor bereits eingeführten Parameters des Positionierungselements vorgesehen ist. Insbesondere weist die Positionsanzeigeeinheit zumindest ein Positionsanzeigeelement auf, welches insbesondere mittels einer analogen Anzeige und insbesondere mittels eines Display-Anzeigeelements und/oder eines LED-Anzeigeelements eine Position beispielsweise durch die Anzeige einer Leistung anhand eines Betrags des induktiven Parameters in einer, zum Betrag des induktiven Parameters korrespondierenden LED-Reihe und/oder einer Richtungsanzeige oder einer Positionsanzeige, in welcher eine Heizleistung farblich kodiert in einer zweidimensionalen Darstellung im Bereich der Positionierungseinheit, insbesondere der Unterlegeinheit, anzeigt. Insbesondere ist der induktive Parameter korreliert mit dem zuvor bereits eingeführten induktiven Leitwert, insbesondere mit der Induktionsspannung. Insbesondere weist das Kochsystem zusätzlich eine Messeinheit mit zumindest einem Messelement auf, welches insbesondere dazu vorgesehen ist, den induktiven Parameter, insbesondere die Induktionsspannung, des Positionierungselements zu messen. Insbesondere ist jedem Positionierungselement zumindest ein Messelement zugeordnet, welches jeweils insbesondere als ein Messschaltkreis ausgebildet ist. Insbesondere ist die Positionsanzeigeeinheit zu einer Anzeige der Positionierung insbesondere des Positionierungselements relativ zu der Induktionsheizeinheit, insbesondere zu dem weiteren Positionierungselement der Positionierungseinheit, insbesondere mittels des induktiven Leitwerts, vorgesehen und insbesondere als analoge Anzeige, als Display-Anzeige und/oder vorzugsweise als LED-Anzeige ausgebildet und insbesondere an der Unterlegeinheit angeordnet, insbesondere in die Unterlegeinheit zumindest teilweise integriert. Dadurch kann eine Positionierung insbesondere durch einen Benutzer ausgeführt und damit vorteilhaft ein Bedienkomfort erhöht werden.

Um vorteilhaft eine Flexibilität der Unterlegeinheit und insbesondere eine verbesserte, insbesondere genauere, Positionierung zu erreichen, wird zudem vorgeschlagen, dass die Positionierungseinheit eine Mehrzahl an Positionierungselementen umfasst, welche der Unterlegeinheit zugeordnet sind und zumindest im Wesentlich und vorzugsweise vollständig baugleich zu dem Positionierungselement ausgebildet sind. Insbesondere umfasst die Positionierungseinheit eine Mehrzahl an Positionierungselementen, welche einer Unterlegeeinheit zugeordnet sind, und eine Mehrzahl an weiteren Positionierungselementen, welche der Induktionsheizeinheit zugeordnet sind. Insbesondere sind das zumindest eine Positionierungselement und ein weiteres Positionierungselement induktiv gekoppelt. Insbesondere sind eine Mehrzahl von Positionierungselementen und ein Mehrzahl von weiteren Positionierungselementen induktiv gekoppelt. Unter "zumindest im Wesentlichen baugleich" soll in diesem Zusammenhang insbesondere verstanden werden, dass sich eines der Positionierungselemente hinsichtlich einer Außenform und/oder eines kleinsten, die Außenform umfassenden Volumens um höchstens 30 %, vorteilhaft um höchstens 20 %, bevorzugt um höchstens 10 % und besonders vorteilhaft um höchstens 5 % sowie hinsichtlich einer Masse um höchstens 30 %, vorteilhaft um höchstens 20 %, bevorzugt um höchstens 10 % und besonders vorteilhaft um höchstens 5 % von den Positionierungselementen unterscheidet.

Für eine verbesserte Positionierung und einen vorteilhaft verbesserten Bedienkomfort wird weiterhin vorgeschlagen, dass das Kochsystem das Kochgeschirrelement aufweist, wobei die Positionierungseinheit zu einer Unterstützung einer Positionierung des Kochgeschirrelements relativ zu der Unterlegeinheit und der Induktionsheizeinheit vorgesehen ist. Insbesondere ist die Positionierung des Kochgeschirrelements relativ zu der "Unterlegeinheit mittels einer zusätzlichen Bestimmung eines weiteren induktiven Parameters, welcher eine Änderung der Spannung und/oder des Stroms durch eine relative Positionierung der Unterlegeinheit zum Kochgeschirrelement bewirkt. Insbesondere korreliert der weitere induktive Parameter mit dem induktiven Leitwert und hat einen insbesondere vom induktiven Parameter verschiedenen Wert.

Zudem wird ein Verfahren zu einer Positionierung eines Kochgeschirrelements, insbesondere eines Kochsystems mit einer Positionierungseinheit, vorgeschlagen, welche zu einer Unterstützung einer Positionierung einer Unterlegeinheit relativ zu einer Induktionsheizeinheit vorgesehen ist und welche wenigstens ein der Unterlegeinheit zugeordnetes Positionierungselement aufweist, welches als induktives Element ausgebildet ist, wobei mittels des Positionierungselements zumindest teilweise zu der Unterstützung der Positionierung der Unterlegeinheit relativ zu der Induktionsheizeinheit beigetragen wird. Dadurch kann eine von einer Energiequelle unabhängig betriebsbereite Positionierung mittels des Positionierungselements bereitgestellt werden, wodurch vorteilhaft Energiekosten gesenkt werden können und vorteilhaft folglich auf eine kabelgestützte Verbindung mit einer externen Energiequelle verzichtet werden kann. Ferner kann insbesondere eine Anwendungsflexibilität verbessert und vorteilhaft ein Bedienkomfort erhöht werden. Zudem können vorteilhaft Material- und/oder Herstellungskosten sowie ein Wartungsaufwand gesenkt werden.

Weitere Vorteile ergeben sich aus der folgenden Zeichnungsbeschreibung. In der Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochsystem mit einem Kochfeld, mit einer Unterlegeeinheit und einer Positionierungseinheit,
- Fig. 2: die Unterlegeinheit mit einer Mehrzahl an Positionierungselementen und
- Fig. 3: eine schematische Abbildung einer Übertragung an induktiver Energie von einer Induktionsheizeinheit auf ein Positionierungselement.

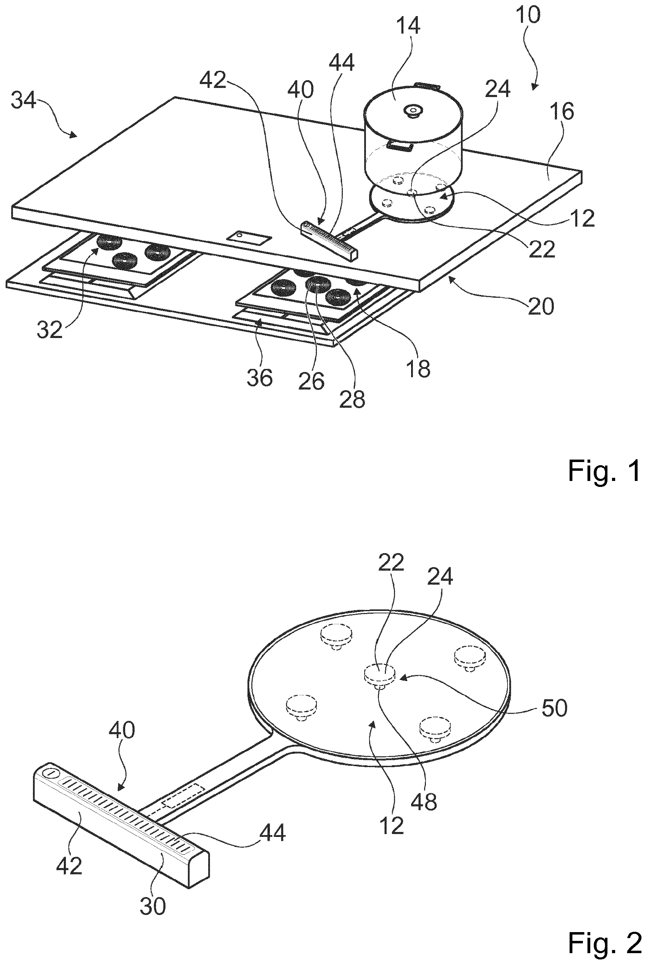

Figur 1 zeigt ein Kochsystem 10 mit einem Kochfeld 34. Das Kochsystem 10 umfasst eine Unterlegeinheit 12. Ferner weist das Kochsystem 10 eine Abdeckplatte 16 auf. In einem montierten Zustand ist das Kochfeld 34 unterhalb der Abdeckplatte 16 angeordnet. Das Kochfeld 34 ist im vorliegenden Fall frei von einer Kochfeldplatte. Die Abdeckplatte 16 ist verschieden von einer Kochfeldplatte ausgebildet. Die Abdeckplatte 16 ist als Küchenarbeitsplatte ausgebildet. Alternativ oder zusätzlich kann ein Kochfeld eine Kochfeldplatte aufweisen, wobei eine Abdeckplatte zumindest teilweise einstückig mit der Kochfeldplatte ausgebildet und/oder vollständig als Kochfeldplatte ausgebildet sein kann.

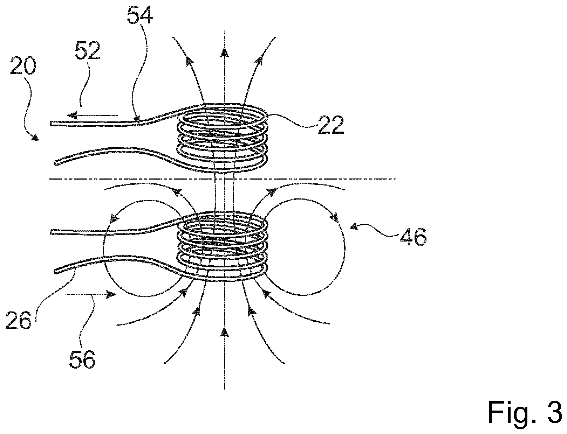

Das Kochfeld 34 weist zumindest eine Induktionsheizeinheit 18 auf. Die Induktionsheizeinheit 18 umfasst ein Induktionsheizelement 28. Das Induktionsheizelement 28 ist zu einer Bereitstellung von induktiver Energie vorgesehen. Das Induktionsheizelement 28 ist zu einer Erhitzung eines Kochgeschirrelements 14 vorgesehen. Das Induktionsheizelement 28 ist zu einer Übertragung von induktiver Energie an das Kochgeschirrelement 14 vorgesehen. Das Induktionsheizelement 28 ist als Induktionsspule ausgebildet. Die Induktive Energie wird mittels eines magnetischen Felds 46 übertragen (vgl. Figur 3). Das magnetische Feld 46 erzeugt in dem Kochgeschirrelement 14 eine Wärmeenergie zur Erhitzung des Kochgeschirrelements 14. Zudem umfasst die Induktionsheizeinheit 18 eine Mehrzahl an weiteren Induktionsheizelementen, welche baugleich zu dem Induktionsheizelement 28 ausgebildet sind. Zusätzlich weist das Kochfeld 34 eine weitere Induktionsheizeinheit 32 auf. Die Induktionsheizeinheit 18 und die weitere Induktionsheizeinheit 32 sind baugleich ausgebildet. Eine Beschreibung der Induktionsheizeinheit 18 kann auf die weitere Induktionsheizeinheit 32 übertragen werden.

Ein Oberflächenbereich der Abdeckplatte 16, unterhalb welcher das Kochfeld 34 angeordnet ist, definiert einen Kochbereich. Zusätzlich kann ein Kochfeld weitere Induktionsheizeinheiten umfassen. Die Abdeckplatte 16 ist zu einem Aufstellen der Unterlegeinheit 12 vorgesehen. In dem Heizbetriebszustand ist die Unterlegeinheit 12 zwischen der Abdeckplatte 16 und dem Kochgeschirrelement 14 angeordnet.

Das Kochfeld 34 umfasst zusätzlich eine Steuereinheit 36. Die Steuereinheit 36 ist unterhalb der Abdeckplatte 16 angeordnet. Im vorliegenden Fall ist die Steuereinheit 36 unterhalb der Induktionsheizeinheit 18 angeordnet. Die Steuereinheit 36 regelt in zumindest einem Heizbetriebszustand des Kochfelds 34 eine Energiezufuhr zu den Induktionsheizeinheiten 18, 32. Alternativ kann eine Steuereinheit zu einer Induktionsheizeinheit auch horizontal versetzt angeordnet sein.

Die Unterlegeinheit 12 verhindert in dem Heizbetriebszustand im Wesentlichen eine Übertragung von Wärme von dem Kochgeschirrelement 14 auf die Abdeckplatte 16. Die Unterlegeinheit 12 weist eine im Wesentlichen scheibenförmige Gestalt auf. Im vorliegenden Ausführungsbeispiel weist die Unterlegeinheit 12 einen Durchmesser von im Wesentlichen 180 mm auf. Die Unterlegeinheit 12 weist eine Dicke von im Wesentlichen 2 mm auf.

Die Unterlegeinheit 12 besteht zu einem Großteil aus einem im Wesentlichen flexiblen Material. Das Material, aus welchem die Unterlegeinheit 12 zu einem Großteil besteht, weist eine geringe Wärmeleitfähigkeit auf. Insbesondere ist das Material, aus welchem die Unterlegeinheit 12 zu einem Großteil besteht, im Wesentlichen isolierend und/oder im Wesentlichen einfach zu reinigen. Im vorliegenden Ausführungsbeispiel besteht die Unterlegeinheit 12 zu einem Großteil aus Silikon. Alternativ kann eine Unterlegeinheit aus einem elastischen Plastik bestehen und eine Dicke von mehr als 2 mm oder weniger als 2 mm aufweisen.

Die Unterlegeinheit 12 weist eine Elektronikeinheit 40 auf, wie die Detailansicht der Unterlegeinheit 12 in Figur 2 zeigt. Die Elektronikeinheit 40 stellt in einem Betriebszustand zumindest eine Funktion bereit. Vor einem Beginn des Heizbetriebszustands stellt die Elektronikeinheit 40 in dem Betriebszustand mehrere Funktionen bereit. Die Elektronikeinheit 40 ist zu einer Sensorfunktion, beispielweise von Kochgeschirrparametern wie Temperatur, Kochdauer, Kochgeschirrgewicht, und/oder zu einer Anzeigen- und Bedienungsfunktion mittels einer Bedieneinheit 42 und einer Anzeigeeinheit 44 vorgesehen.

Im vorliegenden Fall weist das Kochsystem 10 zudem eine Positionierungseinheit 20 auf. Die Positionierungseinheit 20 ist teilweise in der Unterlegeinheit 12 angeordnet und/oder durch diese gebildet. Zudem ist die Positionierungseinheit 20 teilweise in der Induktionsheizeinheit 18 angeordnet und/oder durch diese gebildet. Die Positionierungseinheit 20 ist zu einer Unterstützung einer Positionierung der Unterlegeinheit 12 relativ zu der Induktionsheizeinheit 18 vorgesehen. Zudem ist die Positionierungseinheit 20 zu einer Unterstützung einer Positionierung des Kochgeschirrelements 14 relativ zu der Unterlegeinheit 12 und der Induktionsheizeinheit 18 vorgesehen. Dazu weist die Positionierungseinheit 20 ein Positionierungselement 22 auf. Das Positionierungselement 22 ist der Unterlegeinheit 12 zugeordnet. Das Positionierungselement 22 ist in die Unterlegeinheit 12 integriert. Das Positionierungselement 22 ist in der Unterlegeinheit 12 angeordnet. Das Positionierungselement 22 ist dazu vorgesehen, zumindest teilweise zu der Unterstützung der Positionierung der Unterlegeinheit 12 relativ zu der Induktionsheizeinheit 18 beizutragen. Das Positionierungselement 22 ist als ein induktives Element 24 ausgebildet. Das Positionierungselement 22 ist als eine Spule ausgebildet.

Zudem umfasst die Positionierungseinheit 20 eine Mehrzahl an zusätzlichen Positionierungselementen. Die zusätzlichen Positionierungselemente sind der Unterlegeinheit 12 zugeordnet. Die zusätzlichen Positionierungselemente sind in die Unterlegeinheit 12 integriert. Die zusätzlichen Positionierungselemente sind in der Unterlegeinheit 12 angeordnet. Die zusätzlichen Positionierungselemente sind als induktive Elemente ausgebildet. Die zusätzlichen Positionierungselemente sind als Spulen ausgebildet. Die zusätzlichen Positionierungselemente sind baugleich zu dem Positionierungselement 22 ausgebildet. Im vorliegenden Fall umfasst die Unterlegeinheit 12 fünf Positionierungselemente. Die Positionierungselemente sind im vorliegenden Fall konzentrisch und regelmäßig über die Unterlegeinheit 12 verteilt.

Alternativ können Positionierungselemente auch verschieden ausgebildet sein, beispielsweise in einer Zahl der Spulenwindungen oder eines Spulendurchmessers oder einer Spulenumrissform. Beispielsweise können Positionierungselemente konzentrisch angeordnet und/oder konzentrisch zu einer Unterlegeinheit gefertigt sein. Es ist auch möglich, die Positionierungselemente unregelmäßig in einer Unterlegscheibe anzuordnen. Alternativ kann eine Unterlegeinheit nur ein Positionierungselement aufweisen.

Zudem weist die Positionierungseinheit 20 ein weiteres Positionierungselement 26 auf. Das weitere Positionierungselement 26 ist der Induktionsheizeinheit 18 zugeordnet. Das weitere Positionierungselement 26 ist in der Induktionsheizeinheit 18 angeordnet und/oder durch diese gebildet. Das weitere Positionierungselement 26 ist als ein weiteres induktives Element ausgebildet. Das weitere Positionierungselement 26 ist einstückig mit dem Induktionsheizelement 28 ausgebildet. Das weitere Positionierungselement 26 ist als Spule ausgebildet. Das weitere Positionierungselement 26 ist als ein zu dem Positionierungselement 22 korrespondierendes weiteres Positionierungselement ausgebildet. Das weitere Positionierungselement 26 ist korrespondierend zu den zusätzlichen Positionierungselementen ausgebildet. Das weitere Positionierungselement 26 ist vorgesehen zu einer Positionierung der Unterlegeinheit 12 relativ zu der Induktionsheizeinheit 18 mit dem Positionierungselement 22 zusammenzuwirken. Das weitere Positionierungselement 26 ist dazu vorgesehen, ein magnetisches Feld 46 bereitzustellen. Das weitere Positionierungselement 26 ist dazu vorgesehen, mittels eines angelegten elektrischen Stroms 56 ein magnetisches Feld 46 zu erzeugen. Das weitere Positionierungselement 26 bildet mittels des durch das weitere Positionierungselement 26 fließenden, elektrischen Stroms 56 ein magnetisches Feld 46 aus. Das magnetische Feld 46 ist in einem geometrischen Zentrum des weiteren Positionierungselements 26 stärker als an den Rändern des weiteren Positionierungselements 26. Das weitere Positionierungselement 26 ist ferner dazu vorgesehen zu der Unterstützung der Positionierung der Unterlegeinheit 12 relativ zu der Induktionsheizeinheit 18 mit den zusätzlichen Positionierungselementen zusammenzuwirken.

Das Positionierungselement 22 und das weitere Positionierungselement 26 sind zur Unterstützung der Positionierung induktiv gekoppelt. Wie die schematische Darstellung einer induktiven Kopplung in Figur 3 zeigt, ist das Positionierungselement 22 an ein magnetisches Feld 46 des weiteren Positionierungselements 26 gekoppelt. Das magnetische Feld 46 des weiteren Positionierungselements 26 durchsetzt das Positionierungselement 22. Das magnetische Feld 46 induziert in dem Positionierungselement 22 einen elektrischen Strom. Das magnetische Feld 46 induziert in dem Positionierungselement 22 einen Induktionsstrom 52. Zusätzlich erzeugt das magnetische Feld 46 in dem Positionierungselement 22 eine elektrische Spannung. Das magnetische Feld 46 erzeugt in dem Positionierungselement 22 eine Induktionsspannung 54. Die Stärke des Induktionsstroms 52 in dem Positionierungselement 22 ist korreliert mit der Stärke des magnetischen Felds 46. Die Stärke des Induktionsstroms 52 in dem Positionierungselement 22 ist proportional zu der Stärke des magnetischen Felds 46. Die Stärke der Induktionsspannung 54 in dem Positionierungselement 22 ist korreliert mit der Stärke des magnetischen Felds 46. Der Induktionsstrom 52 und die Induktionsspannung 54 werden als elektrische Energie zu einer Energieversorgung der Elektronikeinheit 40 genutzt. Zudem bildet der Induktionsstrom 52 ein weiteres magnetisches Feld des Positionierungselements 22 aus. Zudem bilden der Induktionsstrom 52 und die Induktionsspannung 54 einen induktiven Leitwert des Positionierungselements 22 aus. Zudem induziert das weitere Positionierungselement 26 und die zusätzlichen weiteren Positionierungselemente jeweils eine zusätzliche Induktionsspannung in den zusätzlichen Positionierungselementen der Unterlegeinheit 12. Die Größen der jeweils zusätzlichen Induktionsspannungen sind abhängig von der Positionierung der zusätzlichen Positionierungselemente relativ zu den weiteren Positionierungselementen und können sich voneinander unterscheiden.

Die Unterlegeinheit 12 umfasst ferner eine Messeinheit 48 (vgl. Figur 2). Die Messeinheit 48 ist dazu vorgesehen, die Induktionsspannung 54 des Positionierungselements 22 zu messen. Dazu weist die Messeinheit 48 ein Messelement 50 auf. Das Messelement 50 ist dem Positionierungselement 22 zugeordnet. Das Messelement 50 ist dazu vorgesehen die Induktionsspannung 54 des Positionierungselements 22 zu messen. Das Messelement 50 ist als ein Messschaltkreis ausgebildet. Das Messelement 50 ist auf das Positionierungselement 22 angepasst. Das Messelement 50 ist mit dem Positionierungselement 22 verbunden. Zudem weist die Messeinheit 48 eine Mehrzahl an zusätzlichen Messelementen auf. Jeweils eins der zusätzlichen Messelemente ist einem der zusätzlichen Positionierungselemente zugeordnet. Die zusätzlichen Messelemente sind jeweils dazu vorgesehen von jeweils einem der Positionierungselemente jeweils eine Induktionsspannung zu messen. Die zusätzlichen Messelemente sind jeweils als Messschaltkreis ausgebildet. Jeweils eins der zusätzlichen Messelemente ist auf jeweils eins der zusätzlichen Positionierungselemente angepasst. Jeweils eins der zusätzlichen Messelemente ist mit jeweils einem der zusätzlichen Positionierungselemente verbunden. Alternativ oder zusätzlich ist denkbar, dass eine Messeinheit zu einer Messung eines Induktionsstroms und/oder der induzierten magnetischen Felder der Positionierungselemente einer Unterlegeinheit vorgesehen ist.

Zudem weist das Kochsystem 10 eine Positionsanzeigeeinheit 30 auf. Die Positionsanzeigeeinheit 30 ist zur Anzeige der Positionierung anhand einer Größe eines induktiven Parameters des Positionierungselements 22 vorgesehen. Die Positionsanzeigeeinheit 30 ist zur Anzeige der Positionierung anhand einer Größe der Induktionsspannung 54 des Positionierungselements 22 vorgesehen. Die Positionsanzeigeeinheit 30 ist zur Anzeige der Positionierung anhand der Größe der zusätzlichen Induktionsspannung der zusätzlichen Positionierungselemente vorgesehen. Die Positionsanzeigeeinheit 30 ist im vorliegenden Fall bevorzugt als LED-Anzeige ausgebildet. Die Positionsanzeigeeinheit 30 zeigt eine Positionierung des Positionierungselements 22 mittels der Induktionsspannung 54 und des zusätzlichen Positionierungselements mittels der zusätzlichen Induktionsspannungen an. Die Positionsanzeigeeinheit 30 zeigt eine Positionierung der Unterlegeinheit 12 mittels der Induktionsspannung 54 und der zusätzlichen Induktionsspannungen an. Im vorliegenden Fall ist die Positionsanzeigeeinheit 30 in die Unterlegeinheit 12 integriert. Im vorliegenden Fall ist die Positionsanzeigeeinheit 30 in die Anzeigeeinheit 44 integriert. Alternativ könnte die Positionsanzeigeeinheit auch in eine Abdeckplatte integriert sein und mittels eines in eine Unterlegeinheit integrierten Signalsenders kommunizieren. Im vorliegenden Fall ist die Positionsanzeigeeinheit 30 als LED-Anzeige ausgebildet und zeigt die Position der Unterlegeinheit 12 beispielsweise mittels einer LED Reihe und/oder einer digitalen Leistungsanzeige im Zahlenformat an, indem ein zu der Induktionsspannung 54 und der zusätzlichen Induktionsspannung korrespondierender Heizleistungswert als ein Wert mittels der LED-Reihe und/oder einer Prozentangabe angezeigt wird. Alternativ oder zusätzlich könnte eine Positionsanzeigeeinheit eine Richtungsanzeige in Form von zueinander ausgerichteten Pfeilen anzeigen, welche die Richtung einer Position mit einem höheren Heizleistungswert anzeigen. Alternativ könnte eine Positionsanzeigeeinheit als ein Display ausgebildet sein, welches Heizleistungswerte beispielsweise über einen Ausschnitt und/oder einen ganzen Auflagebereich einer Unterlegeinheit kodiert farblich anzeigt und/oder eine Richtung zu einer Position mit einem höheren Heizleistungswert anzeigt.

### Bezugszeichen

- 10: Kochsystem
- 12: Unterlegeinheit
- 14: Kochgeschirrelement
- 16: Abdeckplatte
- 18: Induktionsheizeinheit
- 20: Positionierungseinheit
- 22: Positionierungselement
- 24: induktives Element
- 26: Positionierungselement
- 28: Induktionsheizelement
- 30: Positionsanzeigeeinheit
- 32: Induktionsheizeinheit
- 34: Kochfeld
- 36: Steuereinheit
- 40: Elektronikeinheit
- 42: Bedieneinheit
- 44: Anzeigeeinheit
- 46: Magnetisches Feld
- 48: Messeinheit
- 50: Messelement
- 52: Induktionsstrom
- 54: Induktionsspannung
- 56: elektrischer Strom

## Patentansprüche

1. Kochsystem (10) mit zumindest einer Unterlegeinheit (12), welche in wenigstens einem Heizbetriebszustand zu einer Anordnung zwischen einem zu erhitzenden Kochgeschirrelement (14) und einer Abdeckplatte (16) vorgesehen ist, mit einer Induktionsheizeinheit (18), welche zu einer Erhitzung des Kochgeschirrelements (14) vorgesehen ist, und mit einer Positionierungseinheit (20), welche zu einer Unterstützung einer Positionierung der Unterlegeinheit (12) relativ zu der Induktionsheizeinheit (18) vorgesehen ist, **dadurch gekennzeichnet, dass** die Positionierungseinheit (20) wenigstens ein der Unterlegeinheit (12) zugeordnetes Positionierungselement (22) aufweist, welches als induktives Element (24) ausgebildet und dazu vorgesehen ist, zumindest teilweise zu der Unterstützung der Positionierung der Unterlegeinheit (12) relativ zu der Induktionsheizeinheit (18) beizutragen.

2. Kochsystem (10) nach Anspruch 1, **dadurch gekennzeichnet, dass** das Positionierungselement (22) zumindest teilweise in der Unterlegeinheit (12) integriert ist.

3. Kochsystem (10) nach Anspruch 1 oder 2, **dadurch gekennzeichnet, dass** das Positionierungselement (22) als eine Spule ausgebildet ist.

4. Kochsystem (10) nach einem der vorhergehenden Ansprüche, **dadurch gekennzeichnet, dass** die Positionierungseinheit (20) wenigstens ein der Induktionsheizeinheit (18) zugeordnetes und zu dem Positionierungselement (22) korrespondierendes weiteres Positionierungselement (26) aufweist, welches dazu vorgesehen ist, zu der Unterstützung der Positionierung der Unterlegeinheit (12) relativ zu der Induktionsheizeinheit (18) mit dem Positionierungselement (22) zusammenzuwirken.

5. Kochsystem (10) nach Anspruch 4, **dadurch gekennzeichnet, dass** die Induktionsheizeinheit (18) wenigstens ein Induktionsheizelement (28) aufweist, mit welchem das weitere Positionierungselement (26) einstückig ausgebildet ist.

6. Kochsystem (10) nach einem der vorhergehenden Ansprüche, **dadurch gekennzeichnet, dass** das Positionierungselement (22) dazu vorgesehen ist, mit dem weiteren Positionierungselement (26) zur Unterstützung der Positionierung induktiv zu koppeln.

7. Kochsystem (10) nach einem der vorhergehenden Ansprüche, **gekennzeichnet durch eine** Positionsanzeigeeinheit (30), welche zur Anzeige der Positionierung anhand einer Größe eines induktiven Parameters des Positionierungselements (22) vorgesehen ist.

8. Kochsystem (10) nach einem der vorhergehenden Ansprüche, **dadurch gekennzeichnet, dass** die Positionierungseinheit (20) eine Mehrzahl an Positionierungselementen umfasst, welche der Unterlegeinheit (12) zugeordnet sind und zumindest im Wesentlichen baugleich zu dem Positionierungselement (22) ausgebildet sind.

9. Kochsystem (10) nach einem der vorhergehenden Ansprüche, **gekennzeichnet durch** das Kochgeschirrelement (14), wobei die Positionierungseinheit (20) zu einer Unterstützung einer Positionierung des Kochgeschirrelements (14) relativ zu der Unterlegeinheit (12) und der Induktionsheizeinheit (18) vorgesehen ist.

10. Unterlegeinheit (12) eines Kochsystems (10) nach einem der vorhergehenden Ansprüche.

11. Verfahren zu einer Positionierung eines Kochgeschirrelements (14), insbesondere eines Kochsystems (10) nach einem der Ansprüche 1 bis 9, mit einer Positionierungseinheit (20), welche zu einer Unterstützung einer Positionierung einer Unterlegeinheit (12) relativ zu einer Induktionsheizeinheit (18) vorgesehen ist und welche wenigstens ein der Unterlegeinheit (12) zugeordnetes Positionierungselement (22) aufweist, welches als induktives Element (24) ausgebildet ist, wobei mittels des Positionierungselements (22) zumindest teilweise zu der Unterstützung der Positionierung der Unterlegeinheit (12) relativ zu der Induktionsheizeinheit (18) beigetragen wird.
